(19) Europäisches Patentamt
European Patent Office
Office européen des brevets

(11) **EP 2 056 036 B1**

(12) **FASCICULE DE BREVET EUROPEEN**

(45) Date de publication et mention
de la délivrance du brevet:
**11.11.2015 Bulletin 2015/46**

(51) Int Cl.:
*F24H 3/04* (2006.01)      *H05B 6/50* (2006.01)
*B60H 1/22* (2006.01)      *F24H 3/00* (2006.01)
*F24H 9/18* (2006.01)      *F24H 9/20* (2006.01)

(21) Numéro de dépôt: **08166860.0**

(22) Date de dépôt: **17.10.2008**

(54) **Dispositif de chauffage électrique d'un flux d'air circulant a l'intérieur d'une installation de ventilation, de chauffage et/ou de climatisation d'un véhicule automobile**

Elektrische Heizvorrichtung mit zirkulierendem Luftstrom im Innern einer Anlage zur Belüftung, Heizung und/oder Klimatisierung eines Kraftfahrzeugs

Device for electrically heating an air flow circulating in a ventilation, heating and/or air-conditioning installation of an automobile vehicle

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **31.10.2007 FR 0707651**

(43) Date de publication de la demande:
**06.05.2009 Bulletin 2009/19**

(73) Titulaire: **VALEO SYSTEMES THERMIQUES**
**78321 Le Mesnil Saint-Denis Cedex (FR)**

(72) Inventeurs:
• **Vincent, Philippe**
**28230, Epernon (FR)**
• **Pierron, Frederic**
**78120, Rambouillet (FR)**
• **Tellier, Laurent**
**75116, Paris (FR)**

• **Terranova, Gilbert**
**78610, Le Perray en Yvelines (FR)**
• **Hubert, Clément**
**92100 Boulogne Billancourt (FR)**

(74) Mandataire: **Léveillé, Christophe**
**Valeo Systemes Thermiques**
**Service Propriété Industrielle**
**Branche Thermique Habitacle**
**8, rue Louis Lormand**
**La Verrière BP 513**
**78321 Le Mesnil-Saint-Denis Cedex (FR)**

(56) Documents cités:
EP-A- 0 901 311      EP-A- 1 157 867
EP-A- 1 439 738      EP-A- 1 731 852
WO-A-03/086018      DE-A1- 19 925 757
FR-A- 2 853 198      FR-A- 2 855 933

## Description

### Domaine technique de l'invention.

La présente invention est du domaine des installations de ventilation, de chauffage et/ou de climatisation d'un véhicule automobile. Elle a pour objet un dispositif additionnel de chauffage électrique d'un flux d'air constitutif d'une telle installation. Elle a aussi pour objet un procédé d'assemblage de pièces constitutives dudit dispositif.

### Etat de la technique.

La température de l'air contenu à l'intérieur de l'habitacle d'un véhicule automobile est couramment régulée à partir de la mise en oeuvre d'une installation de ventilation, de chauffage et/ou de climatisation équipant le véhicule. Une telle installation comporte fréquemment un dispositif additionnel de chauffage électrique, tel qu'un radiateur ou analogue, qui est destiné à réchauffer un flux d'air circulant à son travers, préalablement à la délivrance du flux d'air réchauffé à l'intérieur de l'habitacle. Plus particulièrement, un tel dispositif additionnel est destiné à compléter le traitement thermique dudit flux d'air procuré par un radiateur principal que comporte ladite installation. Ce complément est notamment nécessaire immédiatement après la mise en oeuvre du moteur du véhicule, c'est-à-dire pendant un laps de temps où la puissance calorifique délivrée par le radiateur principal est insuffisante pour fournir à un utilisateur du véhicule le confort thermique désiré.

A cet effet, le dispositif additionnel comprend un bloc de chauffe constitué d'une pluralité d'éléments chauffants qui sont disposés dans le flux d'air à réchauffer. De manière courante, le dispositif additionnel est logé à l'intérieur d'un canal de circulation du flux d'air que comporte ladite installation. Le dispositif additionnel comporte un module de commande de la mise en oeuvre du bloc de chauffe. Par exemple, ledit module est un dispositif de commande de la mise en oeuvre sélective desdits éléments chauffants, notamment en fonction d'une requête de confort thermique déterminée par l'utilisateur du véhicule. Pour connaître un environnement technologique proche de la présente invention, on pourra par exemple se reporter aux documents EP0901311 (BEHR GmbH & Co and all), FR2853198 (VALEO CLIMATISATION) et FR2855933 (VALEO CLIMATISATION) qui proposent un dispositif additionnel du genre susvisé.

Le document FR 2855933 est considéré comme représentant l'état de la technique le plus proche de l'objet de la revendication 1 et divulgue toutes les caractéristiques de son préambule.

Selon ces documents, le dispositif additionnel comporte un support sur lequel sont rapportés les éléments chauffants et le module de commande.

Selon EP0901311, le support est agencé en un cadre évidé entre les bords duquel sont encastrées les deux extrémités du bloc de chauffe.

Selon FR2853198, les éléments chauffants sont emboîtés par l'intermédiaire de leurs extrémités respectives à l'intérieur de deux embases qui sont reliées entre elles par une plaque de maintien.

Selon FR2855933, les éléments chauffants sont logés dans un boîtier comprenant des compartiments de chauffe destinés à recevoir les dits éléments.

De tels dispositifs additionnels présentent des inconvénients.

En premier lieu, le nombre de pièces qui composent ledit dispositif mérite d'être réduit pour diminuer ses coûts de fabrication, de maintenance et d'assemblage.

En deuxième lieu, un tel dispositif n'est pas adaptable à une gamme variée et évolutive d'installations de ventilation, de chauffage et/ou de climatisation dans le sens où les dimensions du support déterminent une puissance calorifique maximale que ledit dispositif est apte à fournir, à partir d'une longueur maximale que peut présenter chaque élément chauffant et d'un nombre maximal d'éléments chauffants que le support est à même de loger. Il en découle une contrainte pour les concepteurs d'installations de ventilation, de chauffage et/ou de climatisation qui doivent disposer d'une gamme de supports en corrélation avec la puissance calorifique maximale souhaitée pour chaque installation. Il en découle des coûts de fabrication, de stockage et de référencement qui sont insatisfaisants.

Enfin, les modalités d'assemblage des pièces constitutives dudit dispositif entre elles sont longues, fastidieuses et sont susceptibles de générer des contacts électriques défectueux, voire inexistants, entre les éléments chauffants et le module de commande. Il en découle un risque important de dysfonctionnement qu'il est souhaitable d'éviter.

### Objet de l'invention.

Le but de la présente invention est de proposer un dispositif de chauffage électrique d'un flux d'air circulant à l'intérieur d'une installation de ventilation, de chauffage et/ou de climatisation d'un véhicule automobile, qui soit fiable, efficace, robuste, aisé à fabriquer et constitué d'un nombre de pièces réduits au maximum. Un autre but de la présente invention est de proposer un tel dispositif qui puisse fournir une puissance calorifique variable sans devoir être outre mesure modifié et sans être équipé de matériels mécaniques, électriques et/ou électroniques complexes et coûteux. La présente invention a aussi pour but de proposer un procédé d'assemblage des pièces constitutives du dit dispositif qui soit aisé et rapide à mettre en oeuvre, tout en assurant une fiabilité, une efficacité et une pérennité idoine audit dispositif.

Le dispositif de la présente invention est un dispositif de chauffage électrique d'un flux d'air circulant à l'intérieur d'une installation de ventilation, de chauffage et/ou de climatisation d'un véhicule automobile. Ledit dispositif comprend :

- un bloc de chauffe traversé par le flux d'air comprenant au moins un élément chauffant comportant une première extrémité et une deuxième extrémité,
- un module de commande de la mise en oeuvre de l'élément chauffant, ledit module étant logé à l'intérieur d'un boîtier, et
- des moyens de liaison mécanique entre l'élément chauffant et le boîtier.

Selon la présente invention, lesdits moyens de liaison sont uniquement interposés entre la première extrémité de l'élément chauffant et le boîtier et ces moyens de liaison recouvrent la première extrémité du ou des éléments chauffants.

Il en découle que les moyens de liaison mécanique n'affectent que la première extrémité de l'élément chauffant, en laissant libre de ce genre de liaison la deuxième extrémité de l'élément chauffant. Le fait que la deuxième extrémité de l'élément chauffant soit libre et sans contact avec le boîtier et/ou le module de commande autorise une variabilité de la longueur de l'élément chauffant pour permettre de disposer d'une gamme étendue de dispositifs de chauffage électrique équipés d'un même boîtier.

Ces dispositions sont telles que l'élément chauffant peut être d'une longueur relativement quelconque sans avoir à adapter le boîtier en conséquence. Il en découle un avantage primordial pour les concepteurs de tels dispositifs qui réside dans le fait qu'un même boîtier est à même de porter un élément chauffant issu d'un jeu d'éléments chauffants de longueur respective variée à partir d'une simple interchangeabilité d'un élément chauffant d'une première longueur avec un autre élément chauffant d'une deuxième longueur.

De plus, dans le cas où les éléments chauffants sont en pluralité, un tel boîtier est apte à porter des éléments chauffants de longueur respective différente, de telle sorte que la gamme de puissance calorifique qu'un tel dispositif est à même de fournir est susceptible d'être aussi précise que possible, et tend à être une fonction continue et non une fonction discrète telle que pour les dispositifs de l'art antérieur.

Il en résulte finalement une réduction des coûts de fabrication, de maintenance, de stockage et de référencement de tels dispositifs, ainsi qu'une meilleure efficacité et un confort thermique amélioré pour l'utilisateur.

Le boîtier est préférentiellement réalisé en une matière électriquement isolante, matière plastique ou analogue notamment.

Le boîtier est avantageusement constitué d'au moins deux coquilles assemblées entre elles par des moyens d'assemblage. Ces dispositions visent à permettre un montage rapide du boîtier.

Les moyens d'assemblage sont par exemple l'un quelconque au moins de moyens d'assemblage par clipage, par soudage, par rivetage, par collage et par vissage.

Le boîtier comprend préférentiellement un manchon qui délimite un logement de réception de la première extrémité de l'élément chauffant et qui comporte une ouverture pour le passage de la première extrémité de l'élément chauffant. Il en résulte une aisance de l'insertion de la première extrémité de l'élément chauffant à l'intérieur du logement de réception.

Le manchon est avantageusement équipé des dits moyens de liaison.

Le manchon est de préférence d'une longueur L1 qui est comprise entre 1/20 et 1/2 d'une longueur L2 de l'élément chauffant. Il en résulte un excellent compromis entre un maintien mécanique suffisamment robuste de l'élément chauffant sur le boîtier qui ne grève pas une circulation satisfaisante du flux d'air à travers l'élément chauffant.

Le manchon est avantageusement pourvu d'au moins une première fenêtre pour rendre accessible une zone de liaison entre des bornes électriques de l'élément chauffant et des plots électriques correspondants du module de commande.

Ces dispositions permettent une mise en relation par soudage, par vissage ou analogue des bornes et des plots correspondants entre eux, y compris lorsque l'élément chauffant est disposé à l'intérieur du logement. Il en résulte une aisance des opérations de montage et de maintenance.

Les moyens de liaison mécanique entre l'élément chauffant et le boîtier comprennent avantageusement des moyens élémentaires de liaison mécanique entre l'élément chauffant et le module de commande.

Il en ressort que la liaison mécanique entre l'élément chauffant et le module de command participe de la liaison mécanique entre l'élément chauffant et le boîtier, et conforte la tenue et la cohésion mécanique de l'ensemble du dispositif de chauffage formé de l'élément chauffant, du boîtier et du module de commande. Ce dernier étant solidement rapporté à l'intérieur du boîtier par l'intermédiaire de moyens de fixation du type par clipage, par vissage ou analogue, et le module de commande étant également solidement relié à l'élément chauffant, il en ressort un avantage important de la présente invention qui réside en une robustesse idoine du dispositif, grâce à la mise en oeuvre de moyens de liaison fiable et efficace.

De préférence, lesdits moyens élémentaires sont constitués de moyens de liaison électrique entre les bornes électriques de l'élément chauffant et les plots électriques correspondants du module de commande.

La robustesse susvisée de la liaison mécanique entre le module de commande et l'élément chauffant est avantageusement exploitée pour former une liaison électrique fiable et pérenne entre le module de commande et l'élément chauffant. A cet égard, les moyens de liaison sont conçus de sorte à éviter toutes vibrations entre l'élément chauffant et le module de commande. On évite ainsi de nuire au point de soudure ou brasage qui relie l'élément chauffant avec le module de commande. Il en découle une fiabilité améliorée du fonctionnement d'un tel dispositif par rapport aux dispositifs de l'art antérieur.

Lesdits moyens de liaison électrique sont notamment constitués de l'un quelconque au moins de moyens mise en contact par soudage, par vissage et par brochage.

Le manchon est avantageusement muni d'au moins un organe de butée à l'encontre de l'insertion de la première extrémité de l'élément chauffant à l'intérieur du boîtier, l'organe de butée étant formée d'une languette comportant une extrémité distale qui est reliée à un des bords de la première fenêtre et une extrémité proximale qui est équipée d'une extension orientée sensiblement perpendiculairement à la direction d'extension de la languette.

Ces dispositions visent à éviter des détériorations au module de commande, à l'élément chauffant et/ou au boîtier lors d'une insertion en force de la première extrémité de l'élément chauffant à l'intérieur du logement.

Le manchon comporte préférentiellement au moins une paroi qui borde le logement de réception et qui est équipée d'au moins un organe flexible apte à exercer une pression contre la première extrémité de l'élément chauffant disposé à l'intérieur du logement de réception.

Ces dispositions visent simultanément à faciliter l'insertion de la première extrémité de l'élément chauffant à l'intérieur du logement et à conforter le maintien mécanique de l'élément chauffant sur le support.

De préférence, les organes flexibles sont en pluralité et sont répartis par couple d'organes flexibles, dont un premier organe flexible est ménagé sur une première paroi interne et un deuxième organe flexible est ménagé sur une deuxième paroi interne qui est disposée en vis-à-vis de la première paroi interne.

Les premier et deuxième organes flexibles sont par exemple disposés en regard l'un de l'autre, ou encore décalés l'un par rapport à l'autre.

Selon une première variante de réalisation du dispositif selon laquelle l'élément chauffant est assemblé au boîtier à partir de son amenée selon une direction parallèle à un plan d'extension générale du dispositif, l'ouverture du manchon est préférentiellement équipée à sa périphérie de moyens de guidage de la première extrémité de l'élément chauffant lors de son insertion à l'intérieur du logement de réception.

Les moyens de guidage sont par exemple constitués d'au moins un chanfrein bordant l'ouverture.

Le manchon est notamment pourvu d'au moins une deuxième fenêtre dont au moins un des bords est équipé d'un organe d'ancrage de l'élément chauffant. Ces dispositions visent à conforter le maintien de l'élément chauffant sur le support.

L'organe d'ancrage est notamment agencé en un hameçon dont la pointe est apte à être insérée entre des ailettes de l'élément chauffant. Ces dispositions sont telles que la pointe constitue une butée mécanique à l'encontre d'un arrachement de l'élément chauffant hors de son logement de réception.

Selon une deuxième variante de réalisation du dispositif selon laquelle l'élément chauffant est assemblé au boîtier à partir de son amenée selon une direction perpendiculaire au plan d'extension générale du dispositif, au moins une des coquilles est avantageusement constituée de deux parties mobiles l'une par rapport à l'autre, dont une première partie recouvrant au moins le module de commande et une deuxième partie recouvrant l'élément chauffant. Ces dispositions visent à faciliter le montage entre elles des pièces constitutives du dispositif.

La deuxième partie est notamment équipée d'organes d'assemblage par emboîtement destinés à être mis en relation avec des organes d'assemblage coopérants dont est équipée la deuxième coquille.

La deuxième partie est avantageusement équipée de l'organe de butée et d'un doigt apte à être inséré entre des ailettes de l'élément chauffant. Ces dispositions visent à conforter le maintien de l'élément chauffant sur le support.

Selon une première forme de réalisation de la deuxième variante, la deuxième partie est préférentiellement conformée en un pontet formant une pièce indépendante de la première partie.

Selon une deuxième forme de réalisation de la deuxième variante, la deuxième partie est préférentiellement conformé en un couvercle relié à la première partie par une charnière.

La deuxième extrémité de l'élément chauffant est avantageusement équipée d'une pièce de maintien qui est agencée en un talon comportant une enceinte délimitant une zone de réception de la deuxième extrémité de l'élément chauffant.

Ces dispositions visent à conforter la cohésion des pièces constitutives de l'élément chauffant entre elles et à faciliter un montage dudit dispositif à l'intérieur de la dite installation.

La pièce de maintien est préférentiellement réalisée en une matière électriquement isolante, matière plastique ou analogue notamment.

La pièce de maintien est préférentiellement constituée d'au moins deux coques assemblées entre elles par des moyens d'association. Il en résulte une facilitation de l'insertion de la deuxième extrémité de l'élément chauffant à l'intérieur du logement supplémentaire.

Les moyens d'association sont notamment l'un quelconque au moins de moyens d'assemblage par clipage, par soudage, par rivetage, par collage et par vissage.

L'enceinte est par exemple d'une longueur L3 qui est comprise entre 1/20 et 1/2 de la longueur L2 de l'élément chauffant. Il en résulte un excellent compromis entre un maintien mécanique suffisamment robuste de l'élément chauffant sur la pièce de maintien qui n'obère pas une circulation satisfaisante du flux d'air à travers l'élément chauffant.

L'enceinte est avantageusement munie d'au moins une pièce de butée à l'encontre de l'insertion de la deuxième extrémité de l'élément chauffant à l'intérieur dudit espace de réception. Ces dispositions visent à éviter des détériorations à la pièce de maintien lors d'une insertion en force de la deuxième extrémité de l'élément chauffant à l'intérieur du logement supplémentaire.

La pièce de butée est par exemple constituée d'un organe élastique. Ces dispositions visent à faciliter le maintien de l'élément chauffant sur la pièce de maintien.

L'enceinte comporte préférentiellement au moins une cloison équipée d'au moins un élément flexible apte à exercer une pression contre la deuxième extrémité de l'élément chauffant. Cet élément flexible est réparti sur la périphérie de l'extrémité de l'élément chauffant et/ou an bout de cet élément de sorte à exercer un effort sur l'élément.

Ces dispositions visent simultanément à faciliter l'insertion de la deuxième extrémité de l'élément chauffant à l'intérieur du logement supplémentaire et à conforter le maintien mécanique de l'élément chauffant sur la pièce de maintien.

De préférence, les éléments flexibles sont en pluralité et sont répartis par couple d'éléments flexibles, dont un premier élément flexible qui est ménagé sur une première cloison et un deuxième élément flexible qui est ménagé sur une deuxième cloison, disposée en vis-à-vis de la première cloison.

Les premier et deuxième éléments flexibles sont indifféremment disposés en regard l'un de l'autre ou décalés l'un par rapport à l'autre.

L'enceinte comporte préférentiellement un orifice pour le passage de la deuxième extrémité de l'élément chauffant, l'orifice étant muni d'au moins un organe de guidage de la deuxième extrémité de l'élément chauffant. Il en résulte une facilitation de l'insertion de la deuxième extrémité de l'élément chauffant à l'intérieur de l'espace de réception.

L'organe de guidage est notamment constitué d'au moins un chanfrein de guidage.

L'enceinte est par exemple pourvue d'au moins une lumière dont au moins un des bords est équipé d'un élément d'ancrage de l'élément chauffant. Ces dispositions visent à conforter le maintien de l'élément chauffant sur la pièce de maintien.

L'élément d'ancrage est agencé en un crochet dont le bout est apte à être inséré entre les ailettes de l'élément chauffant. Ces dispositions sont telles que le bout constitue une butée mécanique à l'encontre d'un arrachement de l'élément chauffant hors de l'espace de réception de la pièce de maintien.

Les plots du module de commande sont de préférence pourvus de moyens pour faciliter la mise en contact électrique avec les bornes électriques de l'élément chauffant.

Les moyens pour faciliter la mise en contact électrique sont par exemple constitués de l'un quelconque d'un chanfrein d'extrémité ménagé à une extrémité de chaque plot et d'un repli de ladite extrémité.

L'élément chauffant est notamment constitué d'un premier et d'un deuxième ruban métallique entre lesquels est installé au moins un élément résistif à coefficient de transfert positif « CTP », le premier ruban, le deuxième ruban et l'élément résistif étant reliés entre eux par collage.

Les éléments chauffants sont avantageusement en pluralité.

Dans ce cas, le manchon est préférentiellement pourvu d'une cloison isolante qui est destinée à être interposée entre deux éléments chauffants contigus. Ces dispositions visent à éviter un court-circuit entre deux éléments chauffants adjacents, notamment parcourus par deux phases distinctes.

La cloison isolante est avantageusement d'une longueur L4 satisfaisant à la relation :

$$L1 = L2 - L3 - L4 + D,$$

L3 étant la longueur de l'enceinte,
D étant la longueur d'un jeu ménagé entre une extrémité proximale de la cloison et l'enceinte.

Ces dispositions sont telles que les éléments chauffants sont maintenus solidaires entre eux par l'intermédiaire du boîtier porté par la première extrémité des éléments chauffants et de la pièce de maintien portée par la deuxième extrémité des éléments chauffants, sans qu'aucun contact mécanique et/ou électrique n'existe entre le boîtier et la pièce de maintien.

D est préférentiellement supérieur à 5 mm.

Un procédé d'assemblage d'un dispositif de chauffage électrique d'un flux d'air selon la présente invention est principalement reconnaissable en ce qu'il comprend une première étape consistant à emboîter la première extrémité de l'élément chauffant à l'intérieur d'un logement de réception ménagé à l'intérieur du boîtier.

Selon une première variante de mise en oeuvre du procédé, la première étape consiste à emboîter la première extrémité de l'élément chauffant à l'intérieur du logement de réception et à emboîter simultanément la deuxième extrémité de l'élément chauffant à l'intérieur de l'espace de réception d'une pièce de maintien, l'emboîtement des première et deuxième extrémité étant réalisée selon un plan d'extension générale du dispositif de chauffage électrique par l'intermédiaire d'une presse ou analogue exerçant une force de poussée inscrite dans ledit plan d'extension.

Selon une deuxième variante de mise en oeuvre du procédé, la première étape consiste à rapporter la première extrémité de l'élément chauffant à l'intérieur du logement de réception à partir d'une amenée latérale de l'élément chauffant selon une direction d'amenée D3 perpendiculaire au plan d'extension générale P du dispositif de chauffage.

Dans ce cas, le procédé comprend une deuxième étape consistant soit à rapporter sur le boîtier un pontet, soit à refermer un couvercle constitutif du boîtier.

Puis le procédé comprend une troisième étape consistant à fixer indifféremment le pontet ou le couvercle sur une coquille inférieure du boîtier.

Puis le procédé comprend une quatrième étape consistant à emboîter une pièce de maintien sur la deuxième extrémité de l'élément chauffant.

Enfin le procédé comprend une étape terminale consistant à solidariser des bornes électriques de l'élément chauffant et des plots électriques correspondants du module de commande par l'intermédiaire de moyens élémentaires de liaison mécanique entre l'élément chauffant et le module de commande.

**Description des figures.**

La présente invention sera mieux comprise, et des détails en relevant apparaîtront, à la lecture de la description qui va être faite de variantes de réalisation en relation avec les figures des planches annexées, dans lesquelles :

La fig.1 est une illustration schématique d'un dispositif additionnel de chauffage électrique d'un flux d'air.

La fig.2 est une vue de dessus du dispositif illustré sur la fig.1 selon une première approche de la présente invention.

La fig.3 est une vue schématique en perspective de côté d'un boîtier constitutif du dispositif illustré sur les figures précédentes, selon une première approche de réalisation de la présente invention.

La fig.4 est une vue schématique en perspective de dessus du boîtier illustré sur la fig.3.

La fig.5 est une vue schématique en coupe transversale du boîtier illustré sur les fig.3 et fig.4.

La fig.6 est une vue schématique de dessus du boîtier illustré sur les fig.3 à fig.5.

Les fig.7 et fig.8 sont des vues schématiques en coupe transversale de deux formes respectives de réalisation du boîtier illustré sur les fig.3 à fig.6.

La fig.9 est une vue schématique de dessus du boîtier selon une première variante de réalisation du boîtier.

La fig.10 est une vue schématique en coupe longitudinale du boîtier illustré sur la fig.9.

La fig.11 est une vue schématique en perspective de dessus du selon une deuxième variante de réalisation du boîtier.

La fig.12 est une vue schématique en coupe longitudinale du boîtier illustré sur la fig.11.

La fig.13 est une vue schématique en coupe longitudinale partielle du boîtier selon une troisième variante de réalisation du boîtier

La fig.14 est une vue de dessus d'un dispositif illustré sur la fig.1 selon une deuxième approche de la présente invention.

La fig.15 est une vue schématique en perspective d'une pièce de maintien du dispositif illustré sur la figure précédente.

La fig.16 est une vue schématique de dessus d'un dispositif de chauffage selon une troisième approche de la présente invention.

La fig. 17 est une vue de face du dispositif de chauffage selon l'invention où le corps de chauffe est renforcé.

La fig. 18 est une vue en coupe A-A du dispositif tel que montré à la figure 17.

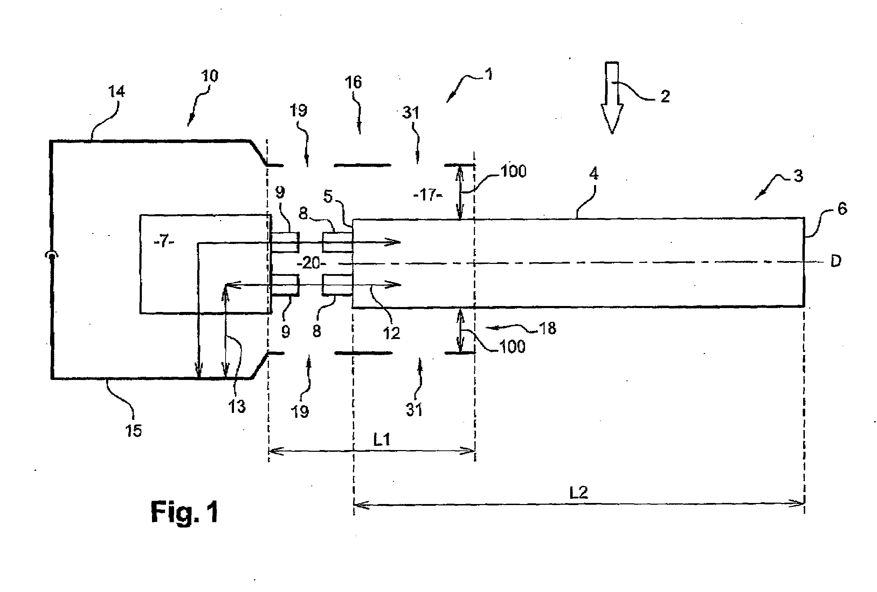

Sur la fig.1, un dispositif additionnel de chauffage électrique 1 est prévu pour réchauffer un flux d'air 2 circulant à son travers. Le dispositif de chauffage 1 est destiné à venir en complément du traitement thermique du flux d'air 2 que procure un radiateur principal d'une installation de ventilation, de chauffage et/ou de climatisation équipant un véhicule automobile.

Le dispositif de chauffage 1 comprend un bloc de chauffe 3 qui est traversé de part en part par le flux d'air 2. Le bloc de chauffe 3 comprend au moins un élément chauffant 4, tel qu'une résistance à coefficient de transfert positif « CTP » ou analogue. L'élément chauffant 4 est conformé en un barreau étendu selon une direction d'extension générale D entre une première extrémité 5 et une deuxième extrémité 6. Le bloc de chauffe est constitué de trois barreaux chauffant identiques et distinctes, c'est-à-dire sans lien mécanique les uns avec les autres.

Le dispositif de chauffage 1 comprend également un module de commande 7 qui pilote la mise en oeuvre de l'élément chauffant 4 à partir d'une application d'une tension électrique entre des bornes électriques 8 que comporte l'élément chauffant 4. Les bornes 8 sont ménagées à la première extrémité 5 de l'élément chauffant 4 pour être mise en contact électrique avec des plots électriques correspondants 9 du module de commande 7.

Le dispositif de chauffage 1 comprend enfin un boîtier 10 qui loge le module de commande 7 pour le préserver de son environnement. Le module de commande 7 gère l'alimentation en puissance des éléments chauffant en même temps qu'il reçoit les informations de commande, via un réseau LIN ou CAN. Le boîtier 10 est couramment réalisé à partir d'une matière isolante électriquement, matière plastique notamment.

Pour conférer au dispositif de chauffage 1 une tenue mécanique, des moyens de liaison mécanique 11 relient l'élément chauffant 4 au boîtier 10.

Selon la présente invention, il est avantageusement proposé d'interposer ces moyens de liaison mécanique 11 entre la première extrémité 5 et le boîtier 10, en laissant exempte la deuxième extrémité 6 de tout moyen participant de cette liaison mécanique entre l'élément chauffant 4 et le boîtier 10. Ainsi, l'élément chauffant 4 n'est relié au boîtier 10 que par sa première extrémité 5. En d'autres termes, seule la première extrémité 5 de l'élément chauffant 4 est sollicitée par lesdits moyens de liaison mécanique 11 entre le ou les éléments chauffants 4 et le boîtier 10. Ces dispositions sont telles que l'élément chauffant est apte à être d'une longueur L2 relativement quelconque pour délivrer une puissance calorifique adaptée à ladite installation sur laquelle le dispositif de chauffage 1 est rapportée, et finalement pour satisfaire au confort thermique requis par un utilisateur. Il en découle pour les concepteurs de dispositifs de chauffage 1 selon la présente invention une particularité qui réside dans le fait de pouvoir proposer une gamme étendue de dispositifs de chauffage 1 obtenue à partir d'un même boîtier 10 mais avec des éléments chauffants 4 interchangeables et choisis parmi un jeu de tels éléments 4.

Les moyens de liaison mécanique 11 entre l'élément chauffant 4 et le boîtier 10 comprennent des moyens élémentaires 12 de liaison mécanique entre l'élément chauffant 4 et le module de commande 7 auxquels sont associés des moyens de fixation 13 du module de commande 7 au boîtier 10. Lesdits moyens élémentaires 12 de liaison mécanique sont constitués de moyens de liaison électrique entre les bornes électriques 8 de l'élément chauffant 4 et les plots électriques correspondants 9 du module de commande 7. Lesdits moyens de liaison électrique 12 sont notamment des moyens d'assemblage par soudage, par vissage, par rivetage, par brochage ou analogue. Les moyens de liaison mécanique 11 entre l'élément chauffant 4 et le boîtier 10 comprennent aussi des moyens complémentaires 100 de liaison mécanique entre l'élément chauffant 4 et le boîtier 10. Les concepteurs de la présente invention ont fait le choix d'utiliser les moyens de liaison électrique 12 en tant que moyens élémentaires de liaison mécanique entre l'élément chauffant 4 et le module de commande 7, pour améliorer la cohésion du dispositif de chauffage 1, et en conséquence augmenter sa fiabilité et sa pérennité.

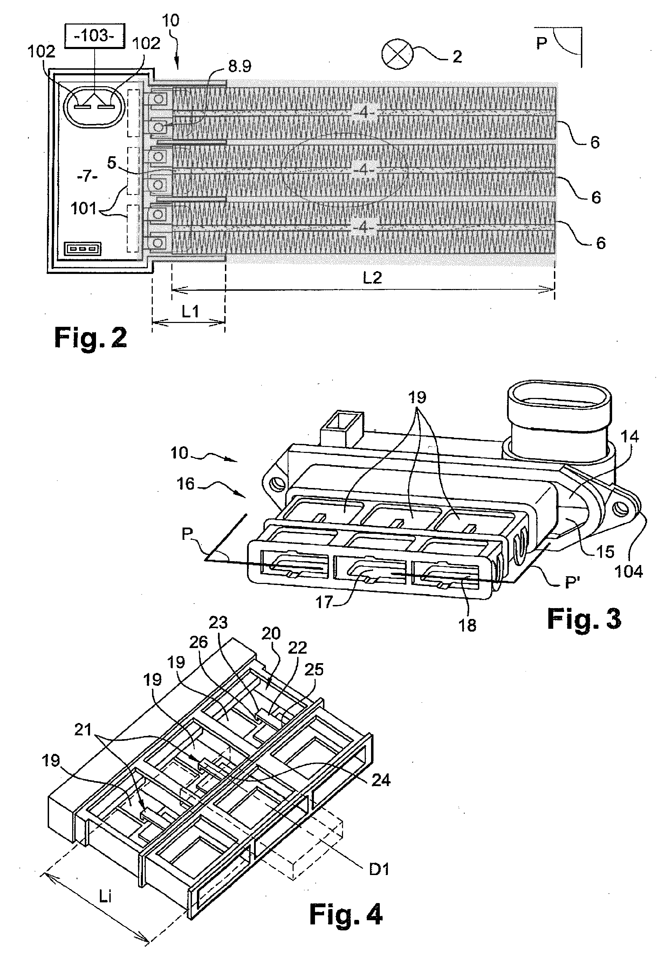

Selon la première variante de réalisation représentée sur la fig.2, les éléments chauffants 4 sont en pluralité, au nombre de trois, et la deuxième extrémité des éléments chauffants 4 est libre. Les éléments chauffants 4 sont agencés selon un plan P d'extension générale du dispositif de chauffage 1 de telle sorte que le flux d'air 2 à réchauffer traverse ledit plan P selon une direction sensiblement orthogonale à ce dernier. Le module de commande 7 comprend des modules élémentaires de commande 101, par exemple des transistors, pour le contrôle de la mise en oeuvre sélective de chacun des éléments chauffants 4. Le module de commande 7 comprend également des plots de connexion 102 pour sa mise en relation avec une source d'alimentation électrique 103.

Sur la fig.3, le boîtier 10 est constitué de deux coquilles, supérieure 14 et inférieure 15, assemblées entre elles par clipage selon un plan de joint P' parallèle au plan d'extension générale P du dispositif de chauffage 1. Le boîtier 10 comprend un manchon 16 qui délimite un logement de réception 17 de la première extrémité 5 de l'élément chauffant 4. Le manchon 16 comporte une ouverture 18 pour le passage de la première extrémité 5 de l'élément chauffant 4_lors de la mise en place de cette dernière à l'intérieur du logement de réception 17. L'ouverture 18 est ménagée perpendiculairement au plan d'extension générale P du dispositif de chauffage 1, pour permettre notamment un emboîtement de la première extrémité respective 5 des éléments chauffants 4 à partir d'une translation de ces derniers dans le dit plan P. Le manchon 16 est d'une longueur L1 qui est comprise entre 1/20 et 1/2 d'une longueur L2 de l'élément chauffant 4, pour obtenir un compromis satisfaisant entre une bonne cohésion mécanique du dispositif de chauffage 1 et une minimisation de pertes de charge aérauliques susceptibles d'affecter le flux d'air à réchauffer 2. Par ailleurs le boîtier 10, et plus particulièrement la coquille inférieure 15, est muni de moyens de fixation 104, tels que par vissage ou analogue, pour son apport à l'intérieur de ladite installation.

Sur la fig.4, le manchon 16 est pourvu de six premières fenêtres 19 pour rendre accessible une zone de liaison 20 entre les bornes électriques respectives 8 de chaque élément chauffant 4 et les plots électriques correspondants 9 du module de commande 7. Plus précisément les fenêtres 19 sont réparties par couples de fenêtres 19 en vis-à-vis l'une de l'autre respectivement ménagées à travers la coquille supérieur 14 et la coquille inférieure 15, de telle sorte que la zone de liaison soit accessible de part et d'autre du plan P d'extension générale du dispositif de chauffage 1. Cette accessibilité rend possible un soudage entre eux des bornes électriques 8 de l'élément chauffant 4 et des plots électriques correspondants 9 du module de commande 7, après la mise en place de la première extrémité 5 de l'élément chauffant à l'intérieur du logement de réception 17.

Pour sécuriser la mise en place de l'extrémité 5 de l'élément chauffant 4, le manchon 16 est muni de trois organes de butée 21 à l'encontre de l'insertion de la première extrémité 5 de chaque élément chauffant 4 à l'intérieur du boîtier 10. Chaque organe de butée 21 est formé d'une languette 22 comportant une extrémité distale 25 qui est reliée à un des bords 24 de la première fenêtre 19 et une extrémité proximale 23 qui est équipée d'une extension 26, autrement appelé pointeau, orientée sensiblement perpendiculairement à une direction D1 d'extension générale de la languette 22, en étant dirigé vers le logement de réception 17. On notera que la direction D1 d'extension générale de la languette 22 est parallèle à la direction d'extension générale D de l'élément chauffant 4.

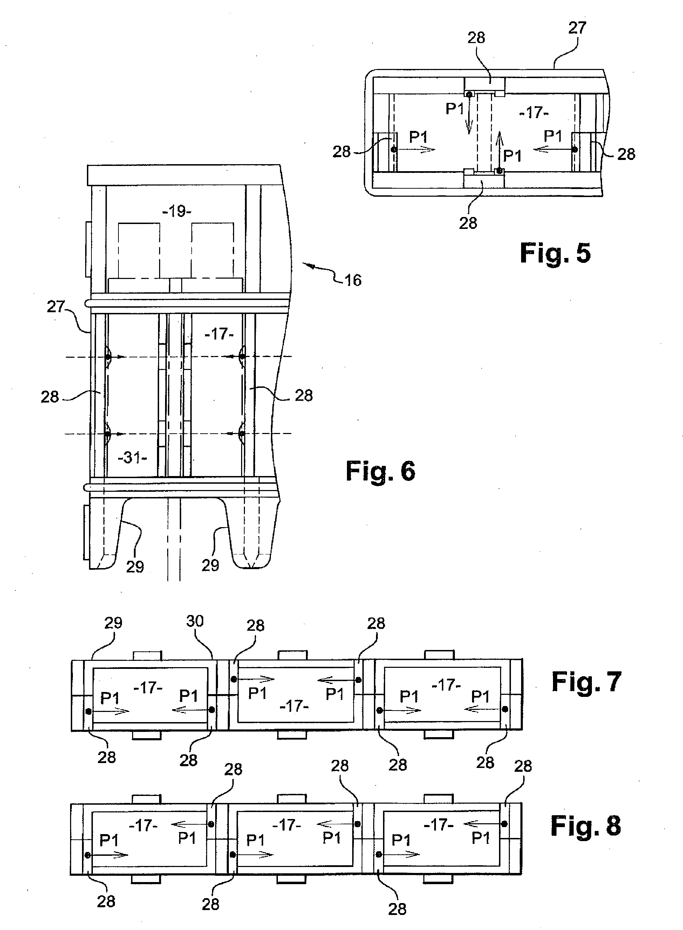

Sur les fig.5 et fig.6, le manchon 16 est principalement constitué d'une paroi 27 qui borde le logement de réception 17 de la première extrémité 5 de l'élément chauffant 4. La paroi 27 est équipée de quatre organes flexibles 28 aptes à exercer chacun une pression P1 contre la première extrémité 5 de l'élément chauffant 4 disposé à l'intérieur du logement de réception 17. Les organes flexibles 28 sont par exemple des masses souples élastiques. Sur la fig.6, l'ouverture 18 du manchon est équipée à sa périphérie de chanfreins 29 pour guider la première extrémité 5 de l'élément chauffant 4 lors de son insertion à l'intérieur du logement de réception 17.

Sur les fig.7 et fig.8, les organes flexibles 28 sont répartis par couple d'organes flexibles 28, dont un premier organe flexible 28 est ménagé sur une première paroi interne 29 et un deuxième organe flexible 28 est ménagé sur une deuxième paroi interne 30 qui est disposée en vis-à-vis de la première paroi interne 29, pour exercer une pression respective P1 opposée et maintenir la première extrémité 5 de l'élément chauffant 4 à l'intérieur du logement de réception 17.

Sur la fig.7, les premier et deuxième organes flexibles 28 sont disposés en regard l'un de l'autre tandis que sur la fig.8 les premier et deuxième organes flexibles 28 sont décalés l'un par rapport à l'autre.

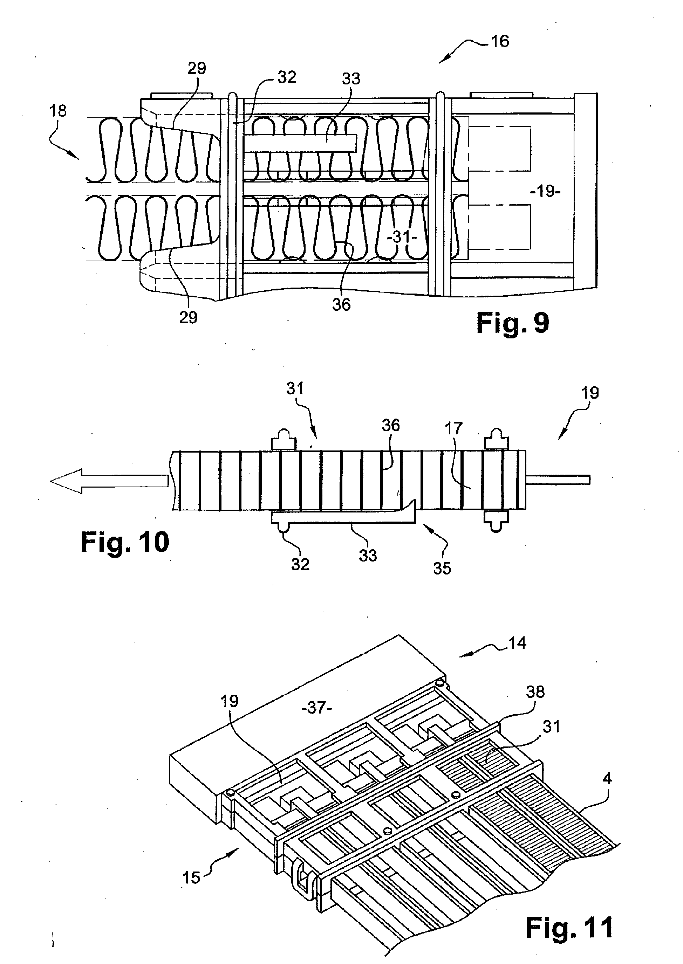

Sur les fig.9 et fig.10, le manchon 16 est pourvu d'une deuxième fenêtre 31 dont un des bords 32 est équipé d'un organe d'ancrage 33 de l'élément chauffant 4. L'organe d'ancrage 33 est notamment agencé en un hameçon dont la pointe 35, visible sur la fig.10, est apte à être insérée entre des ailettes 36 de l'élément chauffant 4. La deuxième fenêtre 31 est préférentiellement interposée entre la première fenêtre 19 et l'ouverture 18. Lors de l'insertion de la première extrémité 5 de l'élément chauffant 4 à l'intérieur du logement de réception 17, la pointe 35 de l'hameçon tend à riper le long des ailettes 36 jusqu'à s'accrocher sur l'une d'entre elles.

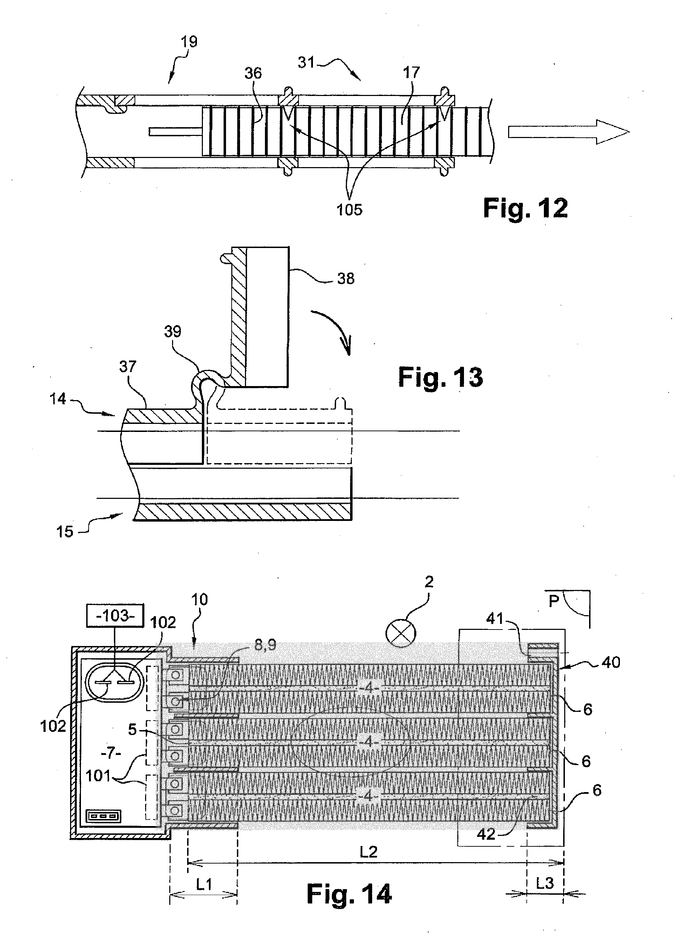

Sur la fig.11, la coquille supérieure 14 est constituée de deux parties mobiles 37,38 l'une par rapport à l'autre, dont une première partie 37 recouvrant le module de commande 7 et une deuxième partie 38 recouvrant l'élément chauffant 4. La deuxième partie 38 est conformé en un pontet formant une pièce indépendante de la première partie 37. Le pontet 38 est destiné à être rapporté sur la première partie 37, après la mise en place de la première extrémité 5 de l'élément chauffant à l'intérieur du logement de réception 17. La deuxième partie 38 est équipée de l'organe d'ancrage 33 et d'un doigt 105 apte à être inséré entre les ailettes 36 de l'élément chauffant 4, le doigt 105 étant plus particulièrement visible sur la fig.12.

Sur la fig.13, la deuxième partie 38 est conformé en un couvercle relié à la première partie 37 par une charnière 39.

Selon la deuxième variante de réalisation représentée sur la fig.14, la deuxième extrémité 6 des éléments chauffants 4 est pourvue d'une pièce de maintien 40 qui est agencée en un talon. La pièce de maintien 40 comporte une enceinte 41 qui délimite une zone de réception 42 de la deuxième extrémité 6 de l'élément chauffant 4. Dans le cas où le dispositif de chauffage est constitué de trois barreaux chauffants, la pièce de maintien comporte elle aussi trois enceintes 41 pour recevoir chacune l'extrémité d'un barreau.

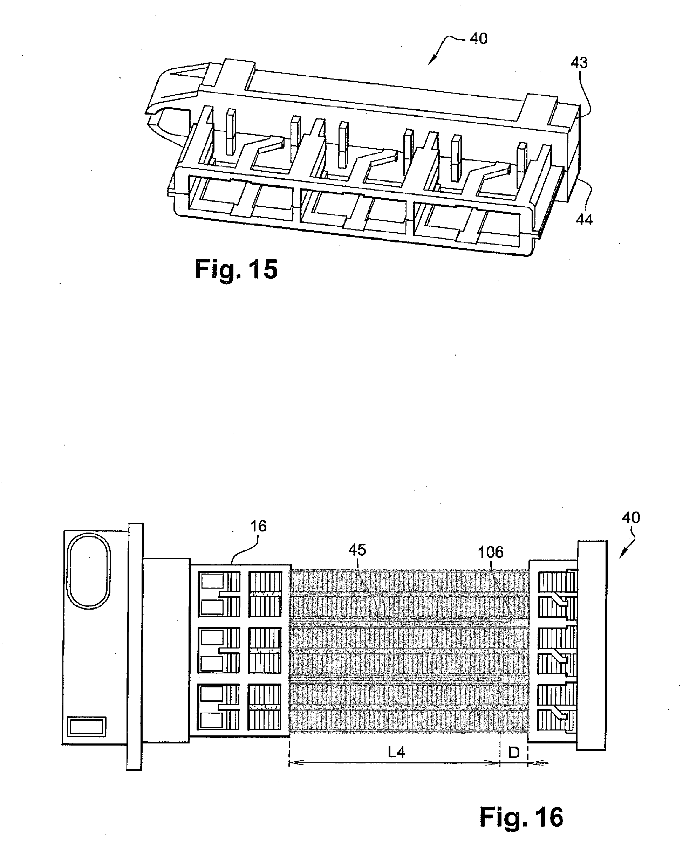

Sur la fig.15, la pièce de maintien 40 est constituée d'au moins deux coques 43, 44 assemblées entre elles par des moyens d'association, du type vissage, clipage, soudage, rivetage ou une combinaison de ces moyens d'association.

Les dispositions décrites pour le manchon 16 sur les fig.5 à fig.10 sont déclinées à l'identique pour la pièce de maintien 40. Il en ressort que cette dernière 40 est équipée des mêmes moyens de retenue des deuxièmes extrémités 6 des éléments chauffants 4 que le manchon 16 du boîtier 10 pour les premières extrémités 5 des éléments chauffants 4, ces moyens de retenue n'étant pas à nouveau décrit plus avant.

Sur la fig.16, le manchon 16 est pourvu d'une cloison isolante 45 qui est destinée à être interposée entre deux éléments chauffants contigus 4. On remarquera que la cloison isolante 45 est d'une longueur L4 satisfaisant à la relation :

$$L1 = L2 - L3 - L4 + D,$$

L3 étant la longueur de l'enceinte,
D étant la longueur d'un jeu ménagé entre une extrémité proximale 106 de la cloison isolante 45 et l'enceinte 41, D étant supérieur à 5 mm.

La figure 16 illustre trois cloisons isolantes électriquement à titre d'exemple mais une seule suffit.

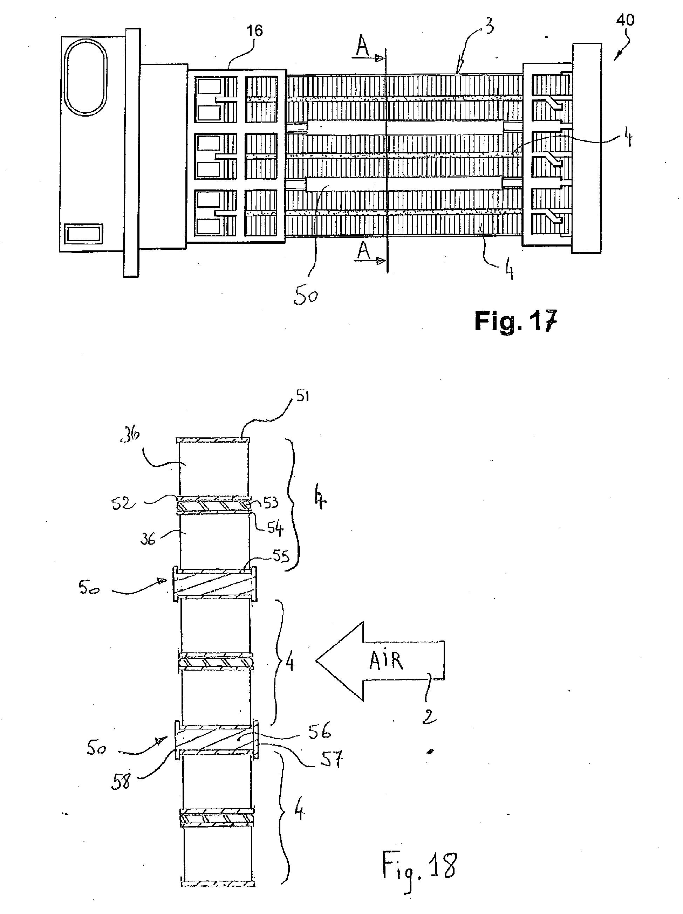

La figure 17 montre le dispositif de chauffage selon l'invention dans lequel est ajouté au moins une barrette 50 entre deux éléments chauffants 4. Dans le cas de la figure 17, il est interposé deux barrettes 50 puisque le dispositif de chauffage comporte trois éléments chauffants 4. Cette barrette 50 s'étend longitudinalement au centre du corps de chauffe, c'est-à-dire dans le plan du corps de chauffe et en direction de l'extrémité 6 de l'un des éléments chauffants. En revanche, cette barrette 50 ne vient pas toucher le boîtier 10, notamment le manchon 16, ni la pièce de maintien 40, autrement appelée talon. Il est maintenu un jeu de 5 mm minimum entre la barrette 50 et le boîtier 10, notamment le manchon 16, et entre la barrette 50 et la pièce de maintien 40. Il n'y a donc pas de liaison mécanique directe entre ces trois pièces.

La barrette 50 chevauche le ruban métallique de chaque élément chauffant adjacent. La barrette présente alors une fonction de renfort qui évite à la partie corps de chauffe de flamber. Cette barrette présente une deuxième fonction qui vise à améliorer la puissance de chauffe dissipée par les éléments chauffants 4 tout en maintenant une perte de charge sur l'air la plus faible possible. En effet, les barrettes 50 obstruent le passage d'air et obligent donc ce dernier à traverser les ailettes ou intercalaires dissipatrices 36 ce qui augmente l'échange thermique entre ces dernières et l'air traversant le bloc de chauffe 3. La figure 17 montre les barrettes 50 en combinaison avec le manchon 16 et la pièce de maintien 40 mais l'utilisation des barrettes 50 n'est pas soumise à l'utilisation de la pièce de maintien. Autrement dit, l'invention peut se limiter au boîtier 10, au manchon 16 et à l'insertion des barrettes 50. Dans ce dernier cas, ces barrettes 50 sont maintenues mécaniquement sur les éléments chauffants 4, par clippage ou collage notamment.

La figure 18 montre la structure interne du bloc de chauffe 3 équipé des barrettes 50. L'élément chauffant 4 comprend une première électrode 51 collée sur l'intercalaire 36, cette dernière étant à son tour plaquée ou collée sur une deuxième électrode 52. Une ou plusieurs pierres 53 à effet CTP sont interposées entre la deuxième électrode 52 et une troisième électrode 54 sur laquelle est collée une deuxième intercalaire 36. Une quatrième électrode 55 est collée sur la face de l'intercalaire parallèle à la direction de circulation du flux d'air 2. La structure d'élément chauffant 4 telle que décrite ci-dessus est reproduite sur les deux autres éléments chauffants 4 qui constituent le corps de chauffe 3.

Les barrettes 50 sont installées directement entre deux éléments chauffants 4 adjacents et présentent une section en forme générale de « H ». La barrette 50 comporte une zone centrale 56 de largeur équivalente à la largeur de la première électrode 51 et de la quatrième électrode 55. La zone centrale 56 est terminée sur les faces du dispositif de chauffage traversé par l'air par des extensions 57 et 58. Ces extensions 57 et 58 sont plus épaisses que la zone centrale 56 de la barrette 50 de sorte à délimiter une zone de réception des première et quatrième électrodes 51 et 55. Les extensions 57 et 58 s'étendent au delà de la zone centrale 56 et perpendiculairement au flux d'air 2 au moins d'une distance égale à l'épaisseur la plus faible d'une des première ou quatrième électrode 51, 55.

## Revendications

1. Dispositif de chauffage électrique (1) d'un flux d'air (2) circulant à l'intérieur d'une installation de ventilation, de chauffage et/ou de climatisation d'un véhicule automobile comprenant :

   - un bloc de chauffe (3) traversé par le flux d'air (2) comprenant au moins un élément chauffant (4) comportant une première extrémité (5) et une deuxième extrémité (6),
   - un module de commande (7) de la mise en oeuvre de l'élément chauffant (4), ledit module (7) étant logé à l'intérieur d'un bottier (10), et
   - des moyens de liaison mécanique (11) entre l'élément chauffant (4) et le boîtier (10), **carac-**

**térisé en ce que** lesdits moyens de liaison (11) sont uniquement interposés entre la première extrémité (5) de l'élément chauffant (4) et le boîtier (10), ces éléments de liaison recouvrant la première extrémité de l'élément chauffant.

2. Dispositif selon la revendication précédente, **caractérisé en ce que** le boîtier (10) est constitué d'au moins deux coquilles (14,15) assemblées entre elles par des moyens d'assemblage.

3. Dispositif selon l'une quelconque des revendications précédentes, **caractérisé en ce que** le boîtier (10) comprend un manchon (16) qui délimite un logement de réception (17) de la première extrémité (5) de l'élément chauffant (4) et qui comporte une ouverture (18) pour le passage de la première extrémité (5) de l'élément chauffant (4).

4. Dispositif selon la revendication 3, **caractérisé en ce que** le manchon (16) est équipé des dits moyens de liaison (11).

5. Dispositif selon l'une quelconque des revendications 3 et 4, **caractérisé en ce que** le manchon (16) est d'une longueur L1 qui est comprise entre 1/20 et 1/2 d'une longueur L2 de l'élément chauffant (4).

6. Dispositif selon l'une quelconque des revendications 3 à 5, **caractérisé en ce que** le manchon (16) est pourvu d'au moins une première fenêtre (19) pour rendre accessible une zone de liaison (20) entre des bornes électriques (8) de l'élément chauffant (4) et des plots électriques (9) correspondants du module de commande (7).

7. Dispositif selon l'une quelconque des revendications précédentes, **caractérisé en ce que** les moyens de liaison mécanique (11) entre l'élément chauffant (4) et le boîtier (10) comprennent des moyens élémentaires (12) de liaison mécanique entre l'élément chauffant (4) et le module de commande (7).

8. Dispositif selon la revendication 7, **caractérisé en ce que** lesdits moyens élémentaires (12) sont constitués de moyens de liaison électrique entre les bornes électriques (8) de l'élément chauffant (4) et les plots électriques correspondants (9) du module de commande (7).

9. Dispositif selon la revendication 8, **caractérisé en ce que** lesdits moyens de liaison électrique sont constitués de l'un quelconque au moins de moyens mise en contact par soudage, par vissage et par brochage.

10. Dispositif selon l'une quelconque des revendications 3 à 9, **caractérisé en ce que** le manchon (16) est muni d'au moins un organe de butée (21) à l'encontre de l'insertion de la première extrémité (5) de l'élément chauffant (4) à l'intérieur du boîtier (10), l'organe de butée (21) étant formée d'une languette (22) comportant une extrémité distale (25) qui est reliée à un des bords (24) de la première fenêtre (19) et une extrémité proximale (23) qui est équipée d'une extension (26) orientée sensiblement perpendiculairement à la direction d'extension D1 de la languette (22).

**11.** Dispositif selon l'une quelconque des revendications 3 à 10, **caractérisé en ce que** le manchon (16) comporte au moins une paroi (27) interne qui borde le logement de réception (17) et qui est équipée d'au moins un organe flexible (28) apte à exercer une pression P contre la première extrémité (5) de l'élément chauffant (4) disposé à l'intérieur du logement de réception (17).

**12.** Dispositif selon l'une quelconque des revendications 3 à 11, **caractérisé en ce que** l'ouverture (18) du manchon (16) est équipée à sa périphérie de moyens de guidage (29) de la première extrémité (5) de l'élément chauffant (4) lors de son insertion à l'intérieur du logement de réception (17).

**13.** Dispositif selon l'une quelconque des revendications 3 à 12, **caractérisé en ce que** le manchon (16) est pourvu d'au moins une deuxième fenêtre (31) dont au moins un des bords (32) est équipé d'un organe d'ancrage (33) de l'élément chauffant (4).

**14.** Dispositif selon l'une quelconque des revendications 2 à 11, **caractérisé en ce qu'**au moins une des coquilles (14,15) est constituée de deux parties mobiles (37,38) l'une par rapport à l'autre, dont une première partie recouvrant (37) au moins le module de commande (7) et une deuxième partie (38) recouvrant l'élément chauffant (4).

**15.** Dispositif selon la revendication 14, **caractérisé en ce que** la deuxième partie est équipée de l'organe de butée (21) et d'un doigt (37') apte à être inséré entre des ailettes (36) de l'élément chauffant (4).

**16.** Dispositif selon l'une quelconque des revendications 14 et 15, **caractérisé en ce que** la deuxième partie (38) est conformé en un pontet formant une pièce indépendante de la première partie (37).

**17.** Dispositif selon l'une quelconque des revendications 14 et 15, **caractérisé en ce que** la deuxième partie (38) est conformé en un couvercle relié à la première partie (37) par une charnière (39).

**18.** Dispositif selon l'une quelconque des revendications précédentes, **caractérisé en ce que** la deuxième extrémité (6) de l'élément chauffant (4) est équipée d'une pièce de maintien (40) qui est agencée en un talon comportant une enceinte (41) délimitant une zone de réception (42) de la deuxième extrémité (6) de l'élément chauffant (4).

**19.** Dispositif selon la revendication 18, **caractérisé en ce que** la pièce de maintien (40) est constituée d'au moins deux coques (43,44) assemblées entre elles par des moyens d'association.

**20.** Dispositif selon l'une quelconque des revendications 18 et 19, **caractérisé en ce que** l'enceinte (41) est munie d'au moins une pièce de butée à l'encontre de l'insertion de la deuxième extrémité (6) de l'élément chauffant (4) à l'intérieur dudit espace de réception (42).

**21.** Dispositif selon l'une quelconque des revendications 18 à 20, **caractérisé en ce que** l'enceinte (41) comporte au moins une cloison équipée d'au moins un élément flexible apte à exercer une pression contre la deuxième extrémité de l'élément chauffant.

**22.** Dispositif selon l'une quelconque des revendications précédentes, **caractérisé en ce que** le dispositif comporte une pluralité d'éléments chauffants

**23.** Dispositif selon la revendication 22, **caractérisé en ce que** un manchon est pourvu d'une cloison isolante (45) qui est destinée à être interposée entre deux éléments chauffants contigus (4) et qui s'étend en direction de la pièce de maintien (40), cette cloison isolante et la pièce de maintien (40) présentent un jeu supérieur à 5 mm.

**24.** Dispositif selon la revendication 22, **caractérisé en ce qu'**il comprend au moins une barrette (50) intercalée entre deux éléments chauffants adjacents (4), cette barrette s'étend dans le plan du corps de chauffe (3) en direction de la deuxième extrémité (6), cette barrette (50) et le boîtier (10) présentent un jeu supérieur à 5 mm.

**25.** Procédé d'assemblage d'un dispositif de chauffage électrique (1) d'un flux d'air (2) selon l'une quelconque des revendications précédentes, **caractérisé en ce qu'**il comprend une première étape consistant à emboîter la première extrémité (5) de l'élément chauffant (4) à l'intérieur d'un logement de réception (17) ménagé à l'intérieur du boîtier (10) à la manière d'un tiroir.

**26.** Procédé d'assemblage selon la revendication 25, **caractérisé en ce que** la première étape consiste à emboîter la première extrémité (5) de l'élément chauffant (4) à l'intérieur du logement de réception (17) et à emboîter simultanément à la manière d'un tiroir la deuxième extrémité (6) de l'élément chauffant (4) à l'intérieur de l'espace de réception (17) d'une pièce de maintien (40), l'emboîtement des première (5) et deuxième (6) extrémité étant réalisée selon un plan d'extension générale P du dispositif de chauffage électrique (1) par l'intermédiaire d'une presse exerçant une force de poussée inscrite dans ledit plan d'extension générale P.

27. Procédé d'assemblage selon la revendication 25, **caractérisé en ce que** la première étape consiste à rapporter la première extrémité (5) de l'élément chauffant (4) à l'intérieur du logement de réception (17) à partir d'une amenée latérale de l'élément chauffant (4) selon une direction d'amenée D3 perpendiculaire au plan d'extension générale P du dispositif de chauffage.

28. Procédé d'assemblage selon la revendication 27, **caractérisé en ce qu'**il comprend une deuxième étape consistant à rapporter sur le boîtier (10) un pontet (38).

29. Procédé d'assemblage selon la revendication 27, **caractérisé en ce qu'**il comprend une deuxième étape consistant à refermer un couvercle (38) constitutif du boîtier (10).

30. Procédé d'assemblage selon les revendications 28 ou 29, **caractérisé en ce qu'**il comprend une troisième étape consistant à fixer indifféremment le pontet (38) ou le couvercle (38) sur une coquille inférieur (15) du boîtier (10).

31. Procédé d'assemblage selon l'une quelconque des revendications 27 à 30, **caractérisé en ce qu'**il comprend une quatrième étape consistant à emboîter une pièce de maintien (40) sur la deuxième extrémité (6) de l'élément chauffant (4).

32. Procédé d'assemblage selon l'une quelconque des revendications 25 à 31, **caractérisé en ce qu'**il comprend une étape terminale consistant à solidariser des bornes électriques (8) de l'élément chauffant (4) et des plots électriques correspondants (9) du module de commande (7) par l'intermédiaire de moyens élémentaires (12) de liaison mécanique entre l'élément chauffant (4) et le module de commande (7).

**Patentansprüche**

1. Elektrische Heizvorrichtung (1) eines Luftstroms (2), der im Inneren einer Anlage zur Belüftung, Heizung und/oder Klimatisierung eines Kraftfahrzeugs zirkuliert, die Folgendes umfasst:

    - einen Heizblock (3), der von dem Luftstrom (2) durchquert wird, der mindestens ein Heizelement (4) umfasst, das ein erstes Ende (5) und ein zweites Ende (6) umfasst,
- ein Steuermodul (7) zur Anwendung des Heizelements (4), wobei das Modul (7) in dem Inneren eines Gehäuses (10) untergebracht ist, und
- mechanische Verbindungsmittel (11) zwischen dem Heizelement (4) und dem Gehäuse (10), **dadurch gekennzeichnet, dass** die Verbindungsmittel (11) nur zwischen das erste Ende (5) des Heizelements (4) und das Gehäuse (10) eingefügt sind, wobei diese Verbindungselemente das erste Ende des Heizelements abdecken.

2. Vorrichtung nach dem vorhergehenden Anspruch, **dadurch gekennzeichnet, dass** das Gehäuse (10) aus mindestens zwei Schalen (14, 15) besteht, die miteinander durch Zusammenfügemittel zusammengefügt sind.

3. Vorrichtung nach einem der vorhergehenden Ansprüche, **dadurch gekennzeichnet, dass** das Gehäuse (10) einen Stutzen (16) umfasst, der eine Unterbringungsaufnahme (17) des ersten Endes (5) des Heizelements (4) abgrenzt und eine Öffnung (18) für das Durchgehen des ersten Endes (5) des Heizelements (4) umfasst.

4. Vorrichtung nach Anspruch 3, **dadurch gekennzeichnet, dass** der Stutzen (16) mit den Verbindungsmitteln (11) ausgestattet ist.

5. Vorrichtung nach einem der Ansprüche 3 und 4, **dadurch gekennzeichnet, dass** der Stutzen (16) eine Länge L1 aufweist, die zwischen 1/20 und 1/2 einer Länge L2 des Heizelements (4) liegt.

6. Vorrichtung nach einem der Ansprüche 3 bis 5, **dadurch gekennzeichnet, dass** der Stutzen (16) mit mindestens einem ersten Fenster (19) versehen ist, um eine Verbindungszone (20) zwischen elektrischen Klemmen (8) des Heizelements (4) und entsprechenden elektrischen Kontaktstücken (9) des Steuermoduls (7) zugänglich zu machen.

7. Vorrichtung nach einem der vorhergehenden Ansprüche, **dadurch gekennzeichnet, dass** die mechanischen Verbindungsmittel (11) zwischen dem Heizelement (4) und dem Gehäuse (10) elementare Mittel (12) zur mechanischen Verbindung zwischen dem Heizelement (4) und dem Steuermodul (7) umfassen.

8. Vorrichtung nach Anspruch 7, **dadurch gekennzeichnet, dass** die elementaren Mittel (12) aus elektrischen Verbindungsmitteln zwischen den elektrischen Klemmen (8) des Heizelements (4) und den entsprechenden elektrischen Kontaktstücken (9) des Steuermoduls (7) bestehen.

9. Vorrichtung nach Anspruch 8, **dadurch gekennzeichnet, dass** die elektrischen Verbindungsmittel aus Mitteln zum Herstellen des Kontakts durch Schweißen und/oder durch Schrauben und/oder durch Kontaktanordnung bestehen.

10. Vorrichtung nach einem der Ansprüche 3 bis 9, **dadurch gekennzeichnet, dass** der Stutzen (16) mit mindestens einem Anschlagorgan (21) gegen das Einfügen des ersten Endes (5) des Heizelements (4) in das Innere des Gehäuses (10) versehen ist, wobei das Anschlagorgan (21) aus einer Lasche (22) besteht, die ein distales Ende (25) umfasst, das mit einem der Ränder (24) des ersten Fensters (19) verbunden ist, und ein proximales Ende (23), das mit einer proximalen Erweiterung (26) ausgestattet ist, die im Wesentlichen senkrecht zu der Ausbreitungsrichtung D1 der Lasche (22) ausgerichtet ist.

11. Vorrichtung nach einem der Ansprüche 3 bis 10, **dadurch gekennzeichnet, dass** der Stutzen (16) mindestens eine Innenwand (27) umfasst, die am Rand der Unterbringungsaufnahme (17) liegt und mit mindestens einem biegsamen Organ (28) ausgestattet ist, das geeignet ist, einen Druck P gegen das erste Ende (5) des Heizelements (4), das im Inneren der Unterbringungsaufnahme (17) angeordnet ist, auszuüben.

12. Vorrichtung nach einem der Ansprüche 3 bis 11, **dadurch gekennzeichnet, dass** die Öffnung (18) des Stutzens (16) an ihrem Umfang mit Führungsmitteln (29) des ersten Endes (5) des Heizelements (4) bei seinem Einfügen in das Innere der Unterbringungsaufnahme (17) ausgestattet ist.

13. Vorrichtung nach einem der Ansprüche 3 bis 12, **dadurch gekennzeichnet, dass** der Stutzen (16) mit mindestens einem zweiten Fenster (31) versehen ist, von dem mindestens ein Rand (32) mit einem Verankerungsorgan (33) des Heizelements (4) ausgestattet ist.

14. Vorrichtung nach einem der Ansprüche 2 bis 11, **dadurch gekennzeichnet, dass** mindestens eine der Schalen (14, 15) aus zwei zueinander beweglichen Teilen (37, 38) besteht, wobei ein erster Teil (37) mindestens das Steuermodul (7) abdeckt, und ein zweiter Teil (38) das Heizelement (4) abdeckt.

15. Vorrichtung nach Anspruch 14, **dadurch gekennzeichnet, dass** der zweite Teil mit dem Anschlagorgan (21) und einem Finger (37') ausgestattet ist, der geeignet ist, zwischen Rippen (36) des Heizelements (4) eingefügt zu werden.

16. Vorrichtung nach einem der Ansprüche 14 und 15, **dadurch gekennzeichnet, dass** der zweite Teil (38) als ein Steg ausgebildet ist, der ein von dem ersten Teil (37) unabhängiges Teil bildet.

17. Vorrichtung nach einem der Ansprüche 14 und 15, **dadurch gekennzeichnet, dass** der zweite Teil (38) als ein Deckel ausgebildet ist, der mit dem ersten Teil (37) durch ein Scharnier (39) verbunden ist.

18. Vorrichtung nach einem der vorhergehenden Ansprüche, **dadurch gekennzeichnet, dass** das zweite Ende (6) des Heizelements (4) mit einem Halteteil (40) ausgestattet ist, das als ein Absatz eingerichtet ist, der einen Einschluss (41) umfasst, der eine Unterbringungszone (42) des zweiten Endes (6) des Heizelements (4) abgrenzt.

19. Vorrichtung nach Anspruch 18, **dadurch gekennzeichnet, dass** das Halteteil (40) aus mindestens zwei Schalen (43, 44) gebildet ist, die miteinander durch Verbindungsmittel zusammengefügt sind.

20. Vorrichtung nach einem der Ansprüche 18 und 19, **dadurch gekennzeichnet, dass** der Einschluss (41) mit mindestens einem Anschlagteil gegen das Einfügen des zweiten Endes (6) des Heizelements (4) in das Innere des Unterbringungsraumes (42) versehen ist.

21. Vorrichtung nach einem der Ansprüche 18 bis 20, **dadurch gekennzeichnet, dass** der Einschluss (41) mindestens eine Wand umfasst, die mit mindestens einem biegsamen Element ausgestattet ist, das geeignet ist, einen Druck gegen das zweite Ende des Heizelements auszuüben.

22. Vorrichtung nach einem der vorhergehenden Ansprüche, **dadurch gekennzeichnet, dass** die Vorrichtung mehrere Heizelemente umfasst.

23. Vorrichtung nach Anspruch 22, **dadurch gekennzeichnet, dass** ein Stutzen mit einer Isolierwand (45) versehen ist, die dazu bestimmt ist, zwischen zwei nebeneinanderliegende Heizelemente (4) eingefügt zu werden, und sich in Richtung des Halteteils (40) erstreckt, wobei diese Isolierwand und das Halteteil (40) ein Spiel größer als 5 mm aufweisen.

24. Vorrichtung nach Anspruch 22, **dadurch gekennzeichnet, dass** sie mindestens eine Leiste (50) umfasst, die zwischen zwei benachbarte Heizelemente (4) eingefügt ist, wobei sich diese Leiste in der Ebene des Heizkörpers (3) in Richtung des zweiten Endes (6) erstreckt, wobei diese Leiste (50) und das Gehäuse (10) ein Spiel größer als 5 mm aufweisen.

**25.** Verfahren zum Zusammenfügen einer elektrischen Heizvorrichtung (1) eines Luftstroms (2) nach einem der vorhergehenden Ansprüche, **dadurch gekennzeichnet, dass** es einen ersten Schritt umfasst, der darin besteht, das erste Ende (5) des Heizelements (4) in das Innere einer Unterbringungsaufnahme (17), die in dem Inneren des Gehäuses (10) eingerichtet ist, wie eine Schublade einzurasten.

**26.** Verfahren zum Zusammenfügen nach Anspruch 25, **dadurch gekennzeichnet, dass** der erste Schritt darin besteht, das erste Ende (5) des Heizelements (4) in das Innere der Unterbringungsaufnahme (17) einzurasten und gleichzeitig das zweite Ende (6) des Heizelements (4) wie eine Schublade in das Innere des Unterbringungsraumes (17) eines Halteteils (40) einzurasten, wobei das Einrasten des ersten (5) und zweiten (6) Endes gemäß einer allgemeinen Ausbreitungsebene P der elektrischen Heizvorrichtung (1) anhand einer Presse ausgeführt wird, die eine Schubkraft, die in die allgemeine Ausbreitungsebene P fällt, ausübt.

**27.** Verfahren zum Zusammenfügen nach Anspruch 25, **dadurch gekennzeichnet, dass** der erste Schritt darin besteht, das erste Ende (5) des Heizelements (4) in dem Inneren der Unterbringungsaufnahme (17) ausgehend von einer seitlichen Zuführung des Heizelements (4) entlang einer Zuführrichtung D3 senkrecht zu der allgemeinen Ausbreitungsebene P der Heizvorrichtung anzubauen.

**28.** Verfahren zum Zusammenfügen nach Anspruch 27, **dadurch gekennzeichnet, dass** es einen zweiten Schritt umfasst, der darin besteht, einen Steg (38) an das Gehäuse (10) anzubauen.

**29.** Verfahren zum Zusammenfügen nach Anspruch 27, **dadurch gekennzeichnet, dass** es einen zweiten Schritt umfasst, der darin besteht, einen Deckel (38), der das Gehäuse (10) bildet, zu schließen.

**30.** Verfahren zum Zusammenfügen nach den Ansprüchen 28 oder 29, **dadurch gekennzeichnet, dass** es einen dritten Schritt umfasst, der darin besteht, jeweils den Steg (38) oder den Deckel (38) auf einer unteren Schale (15) des Gehäuses (10) zu befestigen.

**31.** Verfahren zum Zusammenfügen nach einem der Ansprüche 27 bis 30, **dadurch gekennzeichnet, dass** es einen vierten Schritt umfasst, der darin besteht, ein Halteteil (40) auf dem zweiten Ende (6) des Heizelements (4) einzurasten.

**32.** Verfahren zum Zusammenfügen nach einem der Ansprüche 25 bis 31, **dadurch gekennzeichnet, dass** es einen abschließenden Schritt umfasst, der darin besteht, elektrische Klemmen (8) des Heizelements (4) und entsprechende elektrische Kontaktstücke (9) des Steuermoduls (7) über elementare Mittel (12) zur mechanischen Verbindung zwischen dem Heizelement (4) und dem Steuermodul (7) fest zu verbinden.

**Claims**

**1.** Device (1) for electrically heating a flow of air (2) circulating inside a motor vehicle heating, ventilation and/or air conditioning installation, comprising:

- a heating unit (3) through which the flow of air (2) passes and comprising at least one heating element (4) comprising a first end (5) and a second end (6),
- a control module (7) controlling operation of the heating element (4), the said module (7) being housed inside a housing (10), and
- connecting means (11) for mechanical connection between the heating element (4) and the housing (10), **characterized in that** the said connecting means (11) are interposed only between the first end (5) of the heating element (4) and the housing (10), these connecting elements covering the first end of the heating element.

**2.** Device according to the preceding claim, **characterized in that** the housing (10) is made up of at least two shells (14, 15) assembled with one another by assembly means.

**3.** Device according to either one of the preceding claims, **characterized in that** the housing (10) comprises a sleeve (16) delimiting a receiving space (17) to accept the first end (5) of the heating element (4) and which comprises an opening (18) for the passage of the first end (5) of the heating element (4).

**4.** Device according to Claim 3, **characterized in that** the sleeve (16) is equipped with the said connecting means (11).

**5.** Device according to either one of Claims 3 and 4, **characterized in that** the sleeve (16) is of a length L1 comprised between 1/20 and 1/2 of a length L2 of the heating element (4).

**6.** Device according to any one of Claims 3 to 5, **characterized in that** the sleeve (16) is provided with at least one first aperture (19) to provide access to a region (20) of connection between electrical terminals (8) of the heating element (4) and corresponding electrical contacts (9) of the control module (7).

7. Device according to any one of the preceding claims, **characterized in that** the means (11) of mechanical connection between the heating element (4) and the housing (10) comprise elementary means (12) of mechanical connection between the heating element (4) and the control module (7).

8. Device according to Claim 7, **characterized in that** the said elementary means (12) consist of means of electrical connection between the electrical terminals (8) of the heating element (4) and the corresponding electrical contacts (9) of the control module (7).

9. Device according to Claim 8, **characterized in that** the said means of electrical connection consist of any one at least of means for establishing contact by welding, by screwing and by pegging.

10. Device according to any one of Claims 3 to 9, **characterized in that** the sleeve (16) is provided with at least one end stop member (21) opposing insertion of the first end (5) of the heating element (4) inside the housing (10), the end stop member (21) being formed of a tongue (22) comprising a distal end (25) which is connected to one of the edges (24) of the first aperture (19) and a proximal end (23) which is equipped with an extension (26) oriented substantially at right angles to the direction D1 of extension of the tongue (22).

11. Device according to any one of Claims 3 to 10, **characterized in that** the sleeve (16) comprises at least one internal wall (27) bordering the receiving space (17) and equipped with at least one flexible member (28) able to apply pressure P to the first end (5) of the heating element (4) arranged inside the receiving space (17).

12. Device according to any one of Claims 3 to 11, **characterized in that** the opening (18) of the sleeve (16) is equipped at its periphery with guide means (29) for guiding the first end (5) of the heating element (4) as it is inserted into the receiving space (17).

13. Device according to any one of Claims 3 to 12, **characterized in that** the sleeve (16) is provided with at least a second aperture (31) of which at least one of the edges (32) is equipped with an anchoring member (33) for anchoring the heating element (4).

14. Device according to any one of Claims 2 to 11, **characterized in that** at least one of the shells (14, 15) is made up of two parts (37, 38) able to move relative to one another, these being a first part (37) covering at least the control module (7) and a second part (38) covering the heating element (4).

15. Device according to Claim 14, **characterized in that** the second part is equipped with the end stop member (21) and with a finger (37') that can be inserted between fins (36) of the heating element (4).

16. Device according to either one of Claims 14 and 15, **characterized in that** the second part (38) is shaped into a bridge forming a piece independent of the first part (37).

17. Device according to either one of Claims 14 and 15, **characterized in that** the second part (38) is shaped into a cover connected to the first part (37) by a hinge (39).

18. Device according to any one of the preceding claims, **characterized in that** the second end (6) of the heating element (4) is equipped with a retaining piece (40) which is arranged as a spur comprising a receptacle (41) delimiting a zone (42) for accepting the second end (6) of the heating element (4).

19. Device according Claim 18, **characterized in that** the retaining piece (40) is made up of at least two shells (43, 44), assembled with one another by connection means.

20. Device according to either one of Claims 18 and 19, **characterized in that** the receptacle (41) is provided with at least one end stop piece countering the insertion of the second end (6) of the heating element (4) into the said receiving space (42).

21. Device according to any one of Claims 18 to 20 **characterized in that** the receptacle (41) comprises at least one partition equipped with at least one flexible element able to apply pressure to the second end of the heating element.

22. Device according to any one of the preceding claims, **characterized in that** the device comprises a plurality of heating elements.

23. Device according to Claim 22, **characterized in that** a sleeve is provided with an insulating partition (45) which is intended to be interposed between two contiguous heating elements (4) and which extends in the direction of the retaining piece (40), this insulating partition and the retaining piece (40) having a clearance in excess of 5 mm.

24. Device according to Claim 22, **characterized in that** it comprises at least one strip (50) intercalated between two adjacent heating elements (4), this strip extending in the plane of the heating body (3) towards the second end (6), this strip (50) and the housing (10) having a clearance greater than 5 mm.

**25.** Method of assembling a device (1) for electrically heating a flow of air (2) according to any one of the preceding claims, **characterized in that** it comprises a first step of fitting the first end (5) of the heating element (4) into a receiving space (17) created inside the housing (10) in the manner of a drawer.

**26.** Method of assembly according to Claim 25, **characterized in that** the first step involves fitting the first end (5) of the heating element (4) into the receiving space (17) and at the same time in the manner of a drawer fitting the second end (6) of the heating element (4) into the receiving space (17) of a retaining piece (40), the fitting-in of the first (5) and second (6) ends being performed along a plane of overall extension P of the electrical heating device (1) using a press that applies a thrusting force inscribed inside the said plane of overall extension P.

**27.** Method of assembly according to Claim 25, **characterized in that** the first step is to bring the first end (5) of the heating element (4) inside the receiving space (17) from a lateral approach of the heating element (4) in a direction of approach D3 perpendicular to the plane of overall extension P of the heating device.

**28.** Method of assembly according to Claim 27, **characterized in that** it comprises a second step that consists in attaching a bridge (38) to the housing (10).

**29.** Method of assembly according to Claim 27, **characterized in that** it comprises a second step that consists in re-closing a cover (38) that forms part of the housing (10).

**30.** Method of assembly according to Claim 28 or 29, **characterized in that** it comprises a third step that consists in fitting the bridge (38) or the cover (38) with no particular preference between them, to a lower shell (15) of the housing (10).

**31.** Method of assembly according to any one of Claims 27 to 30, **characterized in that** it comprises a fourth step that involves fitting a retaining piece (40) onto the second end (6) of the heating element (4).

**32.** Method of assembly according to any one of Claims 25 to 31, **characterized in that** it comprises a final step of securing the electrical terminals (8) of the heating element (4) and the corresponding electrical contacts (9) of the control module (7) using elementary means (12) of mechanical connection between the heating element (4) and the control module (7).

Fig. 1

**Fig. 2**

**Fig. 3**

**Fig. 4**

**Fig. 5**

**Fig. 6**

**Fig. 7**

**Fig. 8**

**Fig. 9**

**Fig. 10**

**Fig. 11**

**Fig. 12**

**Fig. 13**

**Fig. 14**

**Fig. 15**

**Fig. 16**

**Fig. 17**

AIR

Fig. 18

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0901311 A
- FR 2853198
- FR 2855933